# EUROPÄISCHE PATENTSCHRIFT

(11) **EP 3 509 390 B1**
(45) Veröffentlichungstag und Bekanntmachung des Hinweises auf die Patenterteilung: **09.11.2022**
(21) Anmeldenummer: 18214829.6
(22) Anmeldetag: 20.12.2018
(51) Int. Cl.: H05B 1/02

(54) **HAUSHALTSGERÄT**
DOMESTIC APPLIANCE
APPAREIL ÉLECTROMÉNAGER

(30) Priorität: 08.01.2018 ES 201830014
(43) Veröffentlichungstag der Anmeldung: 10.07.2019
(73) Patentinhaber: BSH Hausgeräte GmbH, 81739 München (DE)
(72) Erfinder: Acevedo Simon, Arturo, 50009 Zaragoza (ES); Blasco Rueda, Nicolas, 50007 Zaragoza (ES); Pascual Aza, Jorge, 50018 Zaragoza (ES); Puyal Puente, Diego, 50014 Zaragoza (ES); Valeau Martin, David, 50010 Zaragoza (ES)

(56) Entgegenhaltungen:
- EP-A1- 1 744 248
- EP-A1- 2 099 256
- EP-A1- 3 258 175
- EP-A2- 2 634 495
- EP-B1- 3 258 175
- CA-A1- 2 905 098
- DE-A1- 19 629 155
- DE-A1- 19 811 065
- DE-C2- 19 629 155
- US-A1- 2007 030 161
- US-A1- 2014 252 880

## Beschreibung

Die Erfindung betrifft ein Haushaltsgerät.

Aus dem Stand der Technik sind bereits Kochfelder bekannt, welche mehrere Sensoren sowie eine Steuereinheit aufweisen, welche Heizelemente oder Induktoren eines Induktionskochfelds steuern. Zusätzlich hat die Steuereinheit die Aufgabe, bei welcher eine Überprüfung von Messsignalen der Sensoren durchführt wird, um insbesondere Sicherheitsstandardanforderungen zu erfüllen. Beispielsweise werden Messwerte von Temperatursensoren einer Vielzahl von Überprüfungen, unter anderem einer Plausibilitätskontrolle oder einem Stuck-At-Test, unterzogen, wobei keine Selbstdiagnose durch die Steuereinheit oder einer von der Steuereinheit verschiedenen Einheit zur Erkennung eines fehlerhaften Betriebszustands der Steuereinheit routinemäßig nicht stattfindet. Die Dokumenten US 2014/252880 A1, DE 196 29 155 A1, EP 2 634 495 A2, DE 198 11 065 A1, EP 2 099 256 A1, US 2007/030161 A1, CA 2 905 098 A1, EP 3 258 175 A1 und EP 1 744 248 A1 offenbaren Haushaltsgeräte nach dem Stand der Technik.

Die Aufgabe der Erfindung besteht insbesondere darin, eine gattungsgemäße Vorrichtung mit verbesserten Eigenschaften hinsichtlich einer Betriebssicherheit bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Haushaltsgerät, insbesondere Kochfeld, mit zumindest einer Funktionseinheit und mit einer Steuereinheit, welche zu einer Ansteuerung der Funktionseinheit vorgesehen ist.

Es wird vorgeschlagen, dass das Haushaltsgerät eine von der Steuereinheit separat ausgebildete Sicherheitselektronikeinheit aufweist, welche in zumindest einem Betriebszustand zu einer Überprüfung zumindest eines Signals der Funktionseinheit und/oder der Steuereinheit vorgesehen ist.

Durch die erfindungsgemäße Ausgestaltung kann insbesondere eine erhöhte Betriebssicherheit bei einem Betrieb des Haushaltsgeräts erreicht werden. Besonders vorteilhaft kann ein Nutzer vor Unfällen und/oder Verletzungen aufgrund eines Fehlbetriebs effektiv geschützt werden. Vorteilhaft kann eine Beschädigung und/oder eine Zerstörung eines Gargeschirrutensils vermieden werden. Insbesondere kann ein Energieverbrauch vorteilhaft aufgrund einer Fehlervermeidung und/oder Fehlerbeseitigung, insbesondere aufgrund eines fehlerhaften Beheizens einer Kochfeldfläche der Haushaltsgerätevorrichtung, reduziert werden. Ferner kann ein Nutzerkomfort insbesondere aufgrund einer zeitnahen und zeiteffizienten Fehlersuche und/oder Fehlerbehebung gesteigert werden. Insbesondere kann eine Störungsursache unter einem geringeren zeitlichen und/oder materiellen und/oder personellen Aufwand gefunden sowie beseitigt werden. Ferner kann eine Reduktion von Reparaturkosten und Reparaturdauer erzielt werden. Insbesondere kann eine Langlebigkeit des Haushaltsgeräts insbesondere aufgrund zeitnaher Störungsbeseitigung erhöht werden. Vorteilhaft kann eine Kundenzufriedenheit erhöht werden.

Unter einer "Haushaltsgerätevorrichtung", insbesondere unter einer "Gargerätevorrichtung", vorteilhaft unter einer "Kochfeldvorrichtung" und besonders vorteilhaft unter einer "Induktionskochfeldvorrichtung" soll insbesondere zumindest ein Teil, insbesondere eine Unterbaugruppe, eines Haushaltsgeräts, insbesondere eines Gargeräts, vorteilhaft eines Kochfelds und besonders vorteilhaft eines Induktionskochfelds, verstanden werden. Vorteilhaft handelt es sich bei einem die Haushaltsgerätevorrichtung aufweisenden Haushaltsgerät um ein Gargerät. Ein als Gargerät ausgebildetes Haushaltsgerät könnte beispielsweise ein Backofen und/oder eine Mikrowelle und/oder ein Grillgerät und/oder ein Dampfgargerät sein. Vorteilhaft ist das als Gargerät ausgebildete Haushaltsgerät ein Kochfeld und vorzugsweise ein Induktionskochfeld. Alternativ könnte es sich bei einem die Haushaltsgerätevorrichtung aufweisenden Haushaltsgerät auch um eine Kühltruhe und vorteilhaft um einen Kühl- und/oder Gefrierschrank handeln. Ein die Haushaltsgerätevorrichtung aufweisendes Haushaltsgerät könnte ferner auch beispielsweise eine Spülmaschine und/oder eine Waschmaschine und/oder ein Wäschetrockner sein.

Unter einer "Steuereinheit" soll insbesondere eine elektronische Einheit verstanden werden, die vorzugsweise in einer Steuer- und/oder Regeleinheit eines Haushaltsgeräts zumindest teilweise integriert ist und die vorzugsweise dazu vorgesehen ist, zumindest mit der Steuereinheit verbundene Einheiten, mittelbar oder unmittelbar zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter einer "Funktionseinheit" soll hier insbesondere eine Einheit verstanden werden, welche zumindest eine weitere Einheit umfasst, wobei die weitere Einheit in zumindest einem Betriebszustand dazu vorgesehen ist, zumindest eine Funktion, insbesondere zumindest eine Haushaltsgerätehauptfunktion, auszuführen. Die Funktionseinheit und insbesondere die weitere Einheit kann beispielsweise eine Temperaturmessfunktion oder eine weitere Messfunktion durchführen und allgemein als Sensoreinheit verstanden werden. Zusätzlich kann die Funktionseinheit beispielsweise eine Funktion einer Betätigung eines elektromechanischen Schalters ausführen. Vorteilhaft kann die Funktionseinheit eine Vielzahl von Funktionen ausführen, wobei die einzelnen Funktionen jeweils von einer eigenen, weiteren Einheit ausgeführt werden. Unter einer "Ansteuerung" soll hier insbesondere ein Vorgang einer Signalbereitstellung für eine Einheit verstanden werden, wobei die Signalbereitstellung insbesondere eine Energieversorgungsbereitstellung, ein Steuerbefehl und/oder eine Informationsbereitstellung umfassen kann. Insbesondere kann die Ansteuerung drahtlos und/oder drahtgebunden erfolgen.

Unter einer "Sicherheitselektronikeinheit" soll hier insbesondere eine Einheit verstanden werden, welche zumindest zu einer Überprüfung zumindest eines Signals einer anderen Einheit vorgesehen ist und insbesondere einen Sicherheitsvorgang initiieren kann. Insbesondere ist die Sicherheitselektronikeinheit dazu vorgesehen, eine Betriebssicherheit eines die Haushaltsgerätevorrichtung aufweisenden Haushaltsgeräts herzustellen. Unter einer "Überprüfung" soll hier insbesondere ein Vorgang verstanden werden, bei welchen zumindest ein Signal einem Prüfvorgang unterzogen wird, insbesondere dahingehend, ob das Signal bestimmten vorgegebenen Anforderungen genügt. Insbesondere kann der Prüfungsvorgang einen Wertevergleich, insbesondere eines Werts des Signals mit Referenzwerten, eine Plausibilitätsprüfung des Signals und/oder weitere Prüfroutinen, umfassen. Unter einem "Signal" einer Einheit soll hier insbesondere ein elektrisches und/oder optisches Signal verstanden werden, welches insbesondere zumindest eine Information und/oder zumindest eine Energie von und/oder zu der Einheit transportieren kann und welches in zumindest einem Betriebszustand insbesondere an einem Eingang und/oder einem Ausgang der Einheit anliegt und/oder auftritt. Insbesondere soll unter einem "Signal einer Einheit" ein Signal verstanden werden, welches an zumindest einem Eingang der Einheit und/oder zumindest einem Ausgang der Einheit anliegt. Insbesondere können an der Funktionseinheit und/oder an der Steuereinheit mehrere Signale, beispielsweise ein erstes Signal, ein zweites Signal, ein drittes Signal, ein viertes Signal und/oder ein weiteres Signal, anliegen. Jedes Signal der Steuereinheit und/oder der Funktionseinheit, insbesondere das erste Signal, das zweite Signal, das dritte Signal und das vierte Signal, alle weiteren Signale der Funktionseinheit sowie alle Signale der Steuereinheit, sollen hier vorzugsweise gemäß dem kennzeichnenden Teil des Anspruchs 1 jeweils als Signal verstanden werden. Insbesondere kann das Signal zu einer Versorgung einer Einheit mit einer, insbesondere elektrischen, Energie, zu einer Steuerung, zu einer Adressierung, zu einer Referenzierung und/oder zu einer Informationsübertragung vorgesehen sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Des Weiteren wird vorgeschlagen, dass die Sicherheitselektronikeinheit zu einer Fehlerdiagnose der Funktionseinheit und/oder Steuereinheit anhand des Signals vorgesehen ist. Dadurch kann ein vorteilhaft sicherer Anwendungsbetreib erreicht werden. Insbesondere ist die Sicherheitselektronikeinheit zur Erkennung einer Störung bei einem Betrieb der Haushaltsgerätevorrichtung und vorteilhaft zu einer Auswertung die Störung während der Fehlerdiagnose vorteilhaft auszuwerten vorgesehen. Insbesondere kann die von der Funktionseinheit durchgeführte Fehlerdiagnose die Störung beseitigen. Vorteilhaft ist die Funktionseinheit dazu vorgesehen, im Fehlerfall einen Fehlerbericht zu erzeugen, welcher vorzugsweise auf einer Speichereinheit der Haushaltsgerätevorrichtung gespeichert werden und insbesondere einem Servicetechniker zur Verfügung gestellt werden kann. Bevorzugt ist die Sicherheitselektronikeinheit dazu vorgesehen, einem Bediener eine Information zur Verfügung zu stellen, vorzugsweise auf einem grafischen Display der Haushaltsgerätevorrichtung, wobei der Bediener Maßnahmen, insbesondere eine Kontaktierung eines Reparaturservices, zu einer Beseitigung der Störung und/oder des Fehlers ergreifen kann. Ferner wird vorgeschlagen, dass die Sicherheitselektronikeinheit dazu vorgesehen ist, im Falle zumindest eines erkannten Fehlers einen, vorzugsweise für den Bediener und/oder insbesondere für die Haushaltsgerätevorrichtung, sicheren Zustand insbesondere eines die Haushaltsgerätevorrichtung aufweisenden Haushaltsgeräts zu initiieren. Dadurch kann vorteilhaft eine effiziente Vermeidung von Gefahrensituationen, insbesondere von Unfällen mit Beteiligung des Bedieners, erfolgen. Ferner kann dadurch eine Zerstörung der Haushaltsgerätevorrichtung, insbesondere des Haushaltsgeräts, vermieden werden. Vorzugsweise kann eine Energieversorgung beispielsweise von Heizelementen eines Gargeräts, unterbrochen werden. Insbesondere kann ein Weiterbetrieb der Haushaltsgerätevorrichtung eingeschränkt oder unterbunden werden. Bevorzugt ist die Sicherheitselektronikeinheit dazu vorgesehen, eine von dem erkannten Fehler abhängige Überführung der Haushaltsgerätevorrichtung in den sicheren Zustand einzuleiten. Vorteilhaft ist die Sicherheitselektronikeinheit dazu vorgesehen, eine Sicherheitsüberprüfung der Haushaltsgerätevorrichtung vor einer Wiederaufnahme eines Betriebs der Haushaltsgerätevorrichtung auszuführen. Insbesondere kann eine Überführung der Haushaltsgerätevorrichtung vom sicheren Zustand in einen Betriebszustand ausschließlich von einer Fachkraft erfolgen.

Um einen vorteilhaften Betrieb und/oder eine vorteilhafte Überwachung eines Betriebszustandes des Haushaltsgeräts zu erreichen, wird vorgeschlagen, dass die Funktionseinheit zumindest eine Sensoreinheit, insbesondere eine Temperatursensoreinheit, eine Induktorstromsensoreinheit und/oder eine Kochfeldbelegungssensoreinheit, insbesondere zur Detektion zumindest eines Haushaltsgeräteparameters, aufweist. Insbesondere ist die Kochfeldbelegungssensoreinheit dazu vorgesehen, eine Belegung einer Fläche, insbesondere einer Kochfläche mit einem Gargeschirr vorzunehmen, und vorzugsweise eine Größe der belegten Fläche zu ermitteln und/oder eine Gargeschirrerkennung durchzuführen. Vorzugsweise kann die Temperatursensoreinheit eine Temperatur einer elektronischen Komponente der Haushaltsgerätevorrichtung und/oder insbesondere zumindest einer beheizten Oberfläche eines die Haushaltsgerätevorrichtung aufweisenden Gargeräts aufweisen. Insbesondere kann die Induktorstromsensoreinheit dazu vorgesehen sein, einen Strom durch zumindest einen Induktor zu sensieren. Vorteilhaft sind die Temperatursensoreinheit, die Induktorstromsensoreinheit und/oder die Kochfeldbelegungssensoreinheit mit der Steuereinheit datentechnisch verbunden. Bevorzugt weist die Temperatursensoreinheit, die Induktorstromsensoreinheit und/oder die Kochfeldbelegungssensoreinheit eine datentechnische Verbindung mit der Sicherheitselektronikeinheit auf.

Weiterhin wird vorgeschlagen, dass die Funktionseinheit zumindest eine Multiplexereinheit mit zumindest einem Ausgangskanal und einer Mehrzahl von Eingangskanälen aufweist, welche dazu vorgesehen ist, zumindest ein Multiplexeingangssignal auf zumindest einem der Eingangskanäle als ein Multiplexausgangssignal auf dem Ausgangskanal bereitzustellen. Eine Zuordnung des Ausgangskanals zu einem der Eingangskanäle ist mittels eines Multiplexersteuersignals, welches insbesondere die Steuereinheit bereitstellt, steuerbar. Hierdurch kann eine vorteilhafte Ansteuerung und/oder Verbindung einer Teileinheit der Funktionseinheit zu einer weiteren Einheit, insbesondere zur Steuereinheit, hergestellt werden, wobei vorteilhaft eine Reduktion an Hardwarekomponenten erzielt werden kann. Zudem kann eine erhöhte Wirtschaftlichkeit erreicht werden. Insbesondere ist eine Signalflussrichtung von einem der Eingangskanäle zum Ausgangskanal in eine weitere Signalflussrichtung umkehrbar, wobei der Ausgangskanal ein weiteres Multiplexeingangssignal empfängt und einem der Eingangskanäle als ein weiteres Multiplexausgangssignal bereitstellt. Dadurch kann eine bi-direktionale Kommunikation mittels der Multiplexereinheit erfolgen. Vorzugsweise weist die Funktionseinheit mehrere Multiplexereinheiten auf. Insbesondere können mehrere Sensoreinheiten mit einer Multiplexereinheit verbunden sein. Vorteilhaft weist die Funktionseinheit eine erste Multiplexereinheit, mit welcher die Induktorstromsensoreinheit und die Kochfeldbelegungssensoreinheit verbunden sind. Vorteilhaft weist die Funktionseinheit eine zweite Multiplexereinheit, mit welcher die Temperatursensoreinheit verbunden ist. Hierdurch können Kosten reduziert werden.

Darüber hinaus wird vorgeschlagen, dass die Funktionseinheit zumindest eine Induktorauswahleinheit zur Auswahl zumindest eines zu betreibenden Induktors aufweist. Hierdurch kann eine einfache und/oder wirtschaftlich günstige Kontrolle des Induktors, insbesondere einer Energiebereitstellung für den Induktor erfolgen. Unter einer "Induktorauswahleinheit" soll hier insbesondere eine Vorrichtung und/oder eine insbesondere elektronische Schaltung zu einer Auswahl zumindest eines Induktors insbesondere für eine Energieversorgung des Induktors. Unter einem "Induktor" soll hier insbesondere ein Heizelement verstanden werden, welcher insbesondere mit einer vorzugsweise elektrischen Energie versorgbar ist und welcher die Energie als Wärmeenergie bereitstellt. Der Induktor kann beispielsweise als eine Induktionsspule und/oder ein Heizwiderstandselement ausgebildet sein. Insbesondere kann die Induktorauswahleinheit eine logische elektrische und/oder elektronische Schaltung beispielsweise in Form eines Schieberegisters, insbesondere zur Steuerung eines elektromechanischen Schalters, aufweisen. Vorzugsweise ist die Induktorauswahleinheit mit der Steuereinheit signalverbunden.

Außerdem wird vorgeschlagen, dass das Signal ein Versorgungssignal der Steuereinheit ist. Insbesondere stellt das Versorgungssignal der Steuereinheit eine elektrische Energie bereit. Hierdurch kann eine elektrische Versorgung der Steuereinheit vorteilhaft überwacht und/oder gesteuert werden. Eine Abweichung des Versorgungssignals oder eines mit dem Versorgungssignal zusammenhängenden Parameters von einem Sollwert kann auf eine Fehlfunktion einer Komponente der Steuereinheit und/oder einer mit der Steuereinheit verbundenen Einheit, beispielsweise der Multiplexeinheit, hinweisen, und ist durch die Sicherheitselektronikeinheit erfassbar.

In einer weiteren Ausgestaltung wird vorgeschlagen, dass das Signal ein Eingangssignal, insbesondere zur Energieversorgung und/oder zur Steuerung, der Funktionseinheit ist. Eine Abweichung des Eingangssignals zur Energieversorgung insbesondere der Kochfeldbelegungssensoreinheit und/oder zur Steuerung der Multiplexereinheit von einem Eingangssignalsollwert kann auf eine Verfälschung einer Kochfeldbelegung hinweisen. Die Sicherheitselektronikeinheit ist dazu vorgesehen, die Abweichung des Eingangssignals und überführt das Haushaltsgeräts in den sicheren Zustand zu erfassen.

Dadurch kann die Energieversorgung und/oder zur Steuerung gezielt überwacht werden. Insbesondere kann dadurch eine Fehlfunktion die Kochfeldbelegungssensoreinheit erkannt werden.

Außerdem wird vorgeschlagen, dass das Signal ein Ausgangssignal der Funktionseinheit ist. Hierdurch kann vorteilhaft eine Überprüfung insbesondere auf eine korrekte Ausführung einer Steuerung insbesondere der Induktorauswahleinheit erfolgen. Insbesondere gibt zumindest ein Parameter des Ausgangssignals einen Zustand der Funktionseinheit wieder. Insbesondere weist das Ausgangssignal einen Messwert der Temperatursensoreinheit, der Induktorstromsensoreinheit und/oder der Kochfeldbelegungssensoreinheit auf. Vorteilhaft weist das Ausgangssignal eine Information über einen Zustand der Induktorauswahleinheit auf, insbesondere über einen Schaltzustand der Induktoren des Kochfelds. Hierdurch kann eine Überprüfung eines Steuerbefehls zur Steuerung der Induktorauswahleinheit durchgeführt werden. Dadurch kann Prüfung einer korrekt erfolgten Steuerung von Induktoren und/oder als Kochzonen zusammengefassten Induktoren erfolgen. Insbesondere ist das Ausgangssignal mittels einer Feedbackschleife mit der Sicherheitselektronikeinheit verbunden. Vorteilhaft ist die Kochfeldbelegungssensoreinheit mittels einer Referenzmessung überprüfbar, bei welcher die Sicherheitselektronikeinheit eine Reaktion der Kochfeldbelegungssensoreinheit als Antwort auf ein Referenzsignal erfasst. Hierdurch kann insbesondere ein Hardwaredefekt der Kochfeldbelegungssensoreinheit erkannt werden.

Weiterhin wird vorgeschlagen, dass das Signal ein Zwischensignal der Funktionseinheit ist, welches zwischen zumindest zwei Teileinheiten, insbesondere zwischen der Sensoreinheit, insbesondere zwischen der Temperatursensoreinheit, der Induktorstromsensoreinheit, der Kochfeldbelegungssensoreinheit, und der Multiplexereinheit, der Funktionseinheit übermittelbar ist. Unter einer "Teileinheit" soll in diesem Zusammenhang insbesondere eine, insbesondere eigenständig zu einer Funktion fähige, Einheit verstanden werden, wobei mehrere Teileinheiten zusammenwirken können. Die Teileinheiten sind vorzugsweise Teil einer übergeordneten Einheit und können miteinander mittels zumindest eines Zwischensignals kommunizieren. Vorteilhaft kann die Sicherheitselektronikeinheit dazu vorgesehen sein, eine korrekte Adressierung zumindest einer Multiplexereinheit, insbesondere der ersten Multiplexereinheiten und/oder der zweiten Multiplexereinheit, festzustellen. Hierdurch kann eine fehlerhafte Signalzuordnung festgestellt werden.

Weitere Vorteile ergeben sich aus der folgenden Zeichnungsbeschreibung. In der Zeichnung ist ein Ausführungsbeispiel der Erfindung dargestellt.

Es zeigen:
- Fig. 1: ein Matrixkochfeld, welches eine Haushaltsgerätevorrichtung aufweist,
- Fig. 2: ein schematisches Blockbild eines Teils der Haushaltgerätevorrichtung mit einer Funktionseinheit, einer Sicherheitselektronikeinheit, einer Steuereinheit und mit zwischen diesen bestehenden Signalverbindungen und
- Fig. 3: ein beispielhaftes Verfahrensdiagramm eines Verfahrens zum Betrieb der Haushaltsgerätevorrichtung, welches nicht teil der beanspruchten Erfindung ist.

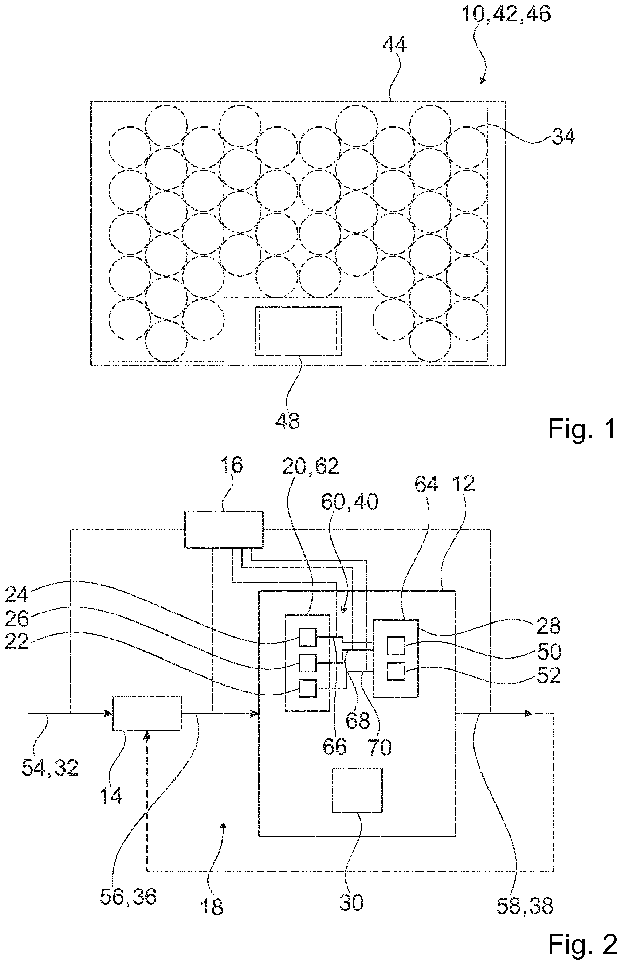

Fig. 1 zeigt ein Haushaltsgerät 42. Das Haushaltsgerät 42 ist als Kochfeld 46, insbesondere als Matrixkochfeld, ausgebildet. Das Kochfeld 46 weist eine Haushaltsgerätevorrichtung 10 auf. Die Haushaltsgerätevorrichtung 10 weist eine Kochfeldoberfläche 44 auf. Unter der Kochfeldoberfläche 44 sind mehrere Induktoren 34 matrixartig angeordnet. Benachbarte und aktivierte Induktoren 34, welche gemeinsam ein auf der Kochfeldoberfläche 44 aufgestelltes Gargeschirr beheizen, bilden eine Kochzone.

Die Haushaltsgerätevorrichtung 10 weist ein Display 48 auf. Das Display 48 ist insbesondere dazu vorgesehen, einem Bediener eine Bedienung des Kochfelds 46 zu ermöglichen. Das Display 48 ist insbesondere dazu vorgesehen, einem Bediener zumindest eine Information anzuzeigen. Die Information kann insbesondere eine Fehlermeldung beinhalten. Das Display 48 kann als Touch-Display ausgebildet sein.

Fig. 2 zeigt ein schematisches Blockbild zumindest eines Teils der Haushaltsgerätevorrichtung. Die Haushaltsgerätevorrichtung 10 weist eine Steuereinheit 14 auf. Die Haushaltsgerätevorrichtung 10 weist eine Funktionseinheit 12 auf. Die Steuereinheit 14 ist zu einer Ansteuerung der Funktionseinheit 12 vorgesehen. Die Funktionseinheit 12 kann ein Signal 18 empfangen. Die Funktionseinheit 12 kann ein Signal 18 aussenden. Das Signal 18 kann ein Versorgungssignal und/oder ein Steuersignal sein. Die Funktionseinheit 12 weist eine Temperatursensoreinheit 22 auf. Die Funktionseinheit 12 weist eine Induktorstromsensoreinheit 24 auf. Die Funktionseinheit 12 weist eine Kochfeldbelegungssensoreinheit 26 auf.

Die Temperatursensoreinheit 22 weist zumindest einen Temperatursensor auf. Der Temperatursensor ist dazu vorgesehen, eine Temperatur der Kochzone und/oder eines der Induktoren 34 zu erfassen. Es ist denkbar, dass jeder Induktor 34 einen ihm zugeordneten Temperatursensor aufweist. Die Temperatursensoreinheit 22 kann einen weiteren Temperatursensor zur Messung einer Temperatur eines Bauteils der Haushaltsgerätevorrichtung 10 aufweisen.

Die Induktorstromsensoreinheit 24 ist zu einer Messung eines durch die Induktoren 34 durchfließenden Stroms vorgesehen. Die Induktorstromsensoreinheit 24 weist zumindest einen Induktorstromsensor auf. Jedem Induktor 34 ist ein Induktorstromsensor zugeordnet. Mittels der Induktorstromsensoreinheit 24 ist eine abgegebene Heizleistung des Induktors 34 feststellbar.

Die Kochfeldbelegungssensoreinheit 26 ist zu einer Detektion eines auf der Kochfeldoberfläche 44 aufgestellten Gargeschirrs vorgesehen. Die Kochfeldbelegungssensoreinheit 26 erkennt eine Position des Gargeschirrs auf der Kochfeldoberfläche 44. Die Kochfeldbelegungssensoreinheit 26 erkennt eine Form eines Gargeschirrbodens auf der Kochfeldoberfläche 44.

Die Funktionseinheit 12 weist eine Multiplexereinheit 28 auf. Die Multiplexereinheit 28 weist einen Ausgangskanal auf. Die Multiplexereinheit 28 weist eine Mehrzahl von Eingangskanälen auf. Bei einer Umkehrung einer Signalströmungsrichtung wird der Ausgangskanal zu einem Eingangskanal der Multiplexereinheit 28 und die Eingangskanäle werden zu Ausgangskanälen der Multiplexereinheit 28.

Die Multiplexereinheit 28 weist einen ersten Multiplexer 50 auf. Die Multiplexereinheit 28 weist einen zweiten Multiplexer 52 auf. Der erste Multiplexer 50 ist mit der Induktorstromsensoreinheit 24 verbunden. Der erste Multiplexer 50 ist mit der Kochfeldbelegungssensoreinheit 26 verbunden. Der zweite Multiplexer 52 ist mit der Temperatursensoreinheit 22 verbunden. Der erste Multiplexer 50 leitet in einem Betriebszustand ein Messsignal von jedem Induktorstromsensor der Induktorstromsensoreinheit 24, an die Steuereinheit 14. Der zweite Multiplexer 52 leitet in dem Betriebszustand ein Messsignal von jedem der Temperatursensoren der Temperatursensoreinheit 22 an die Steuereinheit 14. Der zweite Multiplexer 52 leitet in dem Betriebszustand ein Messsignal Kochfeldbelegungssensoreinheit 26 an die Steuereinheit 14.

Der erste Multiplexer 50 leitet in dem Betriebszustand Signale als Steuerungssignale von der Steuereinheit 14 an die Induktorstromsensoreinheit 24. Der erste Multiplexer 50 leitet in dem Betriebszustand weitere Signale als weitere Steuerungssignale von der Steuereinheit 14 an die Kochfeldbelegungssensoreinheit 26.

Die Steuereinheit 14 steuert in zumindest einem Betriebszustand mittels eines Steuerungssignals eine Adressierung des ersten Multiplexers 50. Die Steuereinheit 14 kontrolliert in zumindest einem Betriebszustand mittels eines weiteren Steuerungssignals eine Adressierung des zweiten Multiplexers 52.

Die Funktionseinheit 12 weist eine Induktorauswahleinheit 30 auf. Die Induktorauswahleinheit 30 ist zur Auswahl eines zu betreibenden Induktors 34 vorgesehen. Die Induktorauswahleinheit 30 weist eine Schieberegistereinheit auf. Die Induktorauswahleinheit 30 weist eine Mehrzahl an elektromechanischen Schalteinheiten auf. Die elektromechanischen Schalteinheiten sind dazu vorgesehen, eine elektrische Verbindung für eine Versorgung der Induktoren 34 mit einer elektrischen Energie herzustellen und zu lösen. Die Steuer-einheit 14 steuert die Induktorauswahleinheit 30 mittels eines Steuerungssignals.

Ein erstes Signal 54 liegt an einem Eingang der Steuereinheit 14 an. Das erste Signal 54 ist ein Versorgungssignal 32 der Steuereinheit 14. Das Versorgungssignal 32 ist zu einer Versorgung der Steuereinheit 14 mit einer elektrischen Energie vorgesehen. Das Versorgungssignal 32 ist durch eine externe Energiequelle, beispielsweise durch ein Haushaltsstromnetz, bereitgestellt.

Die Steuereinheit 14 weist einen Ausgang auf. Am Ausgang der Steuereinheit 14 liegt ein zweites Signal 56 an. Das zweite Signal 56 liegt an einem Eingang der Funktionseinheit 12 an. Das zweite Signal 56 ist ein Eingangssignal 36. Das Eingangssignal 36 ist zur Energieversorgung der Funktionseinheit 12 vorgesehen. Das Eingangssignal 36 ist zur Steuerung der Funktionseinheit 12 vorgesehen.

Das Eingangssignal 36 ist zur Energieversorgung der Kochfeldbelegungssensoreinheit 26 der Funktionseinheit 12 vorgesehen. Das Eingangssignal 36 ist zur Steuerung der Multiplexereinheit 28 vorgesehen.

An einen Ausgang der Funktionseinheit 12 liegt ein drittes Signal 58 an. Das dritte Signal ist ein Ausgangssignal der Funktionseinheit 12. Das dritte Signal 58 liegt an einem weiteren Eingang der Steuereinheit 14 an. Das dritte Signal 58 umfasst das Messsignal der Sensoreinheit 20.

Die Funktionseinheit 12 weist eine erste und eine zweite Teileinheit 62, 64 auf. Die erste Teileinheit 62 ist als Sensoreinheit 20 ausgebildet. Die zweite Teileinheit 64 ist als Multiplexereinheit 28 ausgebildet. Die erste Teileinheit 62 ist mit der zweiten Teileinheit 64 signaltechnisch verbunden. An einem Ausgang der Temperatursensoreinheit 22 liegt ein viertes Signal 60 der Funktionseinheit 12 an. Das vierte Signal 60 liegt an einem Eingang der Multiplexereinheit 28 an. Das vierte Signal 60 ist ein Zwischensignal 40.

An einem Ausgang der Temperatursensoreinheit 22 liegt ein erstes Zwischensignal 66 an. An einem Ausgang der Kochfeldbelegungssensoreinheit 26 liegt ein zweites Zwischensignal 68 an. An einem Ausgang der Induktorstromsensoreinheit 24 liegt ein drittes Zwischensignal 70 an. Das erste und das zweite Zwischensignal 66, 68 liegen an einem Eingang des ersten Multiplexers 50 an. Das dritte Zwischensignal 70 liegt an einem Eingang des zweiten Multiplexers 50 an.

Alle Eingänge und Ausgänge des ersten und des zweiten Multiplexers 50, 52 können in einer umgekehrten Signalstromrichtung betrieben werden.

Die Steuereinheit 14 weist eine Sicherheitselektronikeinheit 16 auf. Die Sicherheitselektronikeinheit 16 ist separat von der Steuereinheit 14 ausgebildet. Die Sicherheitselektronikeinheit 16 ist zu einer Überprüfung des Signals der Funktionseinheit 12 vorgesehen. Die Sicherheitselektronikeinheit 16 ist zu einer Überprüfung des Signals der Steuereinheit 14 vorgesehen.

Die Sicherheitselektronikeinheit 16 ist dazu vorgesehen, im Falle zumindest eines erkannten Fehlers einen sicheren Zustand zu initiieren. Im sicheren Zustand ist ein Betrieb des Matrixkochfelds 46 unterbunden. Das Display 48 zeigt dem Bediener eine Fehlermeldung an. Das Display 48 zeigt dem Bediener den erkannten Fehler an.

Die Sicherheitselektronikeinheit 16 ist zu einer Überprüfung des ersten Signals 56 der Steuereinheit 14 vorgesehen. Das erste Signal 56 ist eine Versorgungsspannung der Steuereinheit 14. Im Falle einer Abweichung der Versorgungsspannung von einem Sollwert stellt die Sicherheitselektronikeinheit 16 einen Fehler fest. Die Abweichung weist auf eine defekte Hardwarekomponente der Steuereinheit 14 hin. Ein Versorgungsspannungsparameter ist mittels einer ersten Feedbackverbindung über den ersten Multiplexer 50 an die Sicherheitselektronikeinheit 16 übermittelbar.

Die Sicherheitselektronikeinheit 16 ist zu einer Überprüfung des zweiten Signals 56 der Steuereinheit 14 vorgesehen. Das zweite Signal 56 ist ein Steuersignal für die Induktorauswahleinheit 30. Im Falle einer falschen Steuerung besteht eine Gefahr eines Beheizens eines falschen Teils der Kochfeldoberfläche 44. Die Sicherheitselektronikeinheit 16 kontrolliert einen Status des Schieberegisters der Induktorauswahleinheit 30. Bei einer Feststellung eines Fehlers des zweiten Signals 56 durch die Sicherheitselektronikeinheit 16 ist ein Betrieb des Matrixkochfelds 46 nicht möglich. Der Status des Schieberegisters ist mittels einer viertel Feedbackverbindung an die Sicherheitselektronikeinheit 16 übermittelbar.

Das zweite Signal 56 ist ein Versorgungssignal der Kochfeldbelegungssensoreinheit 26. Im Falle einer Abweichung der Versorgungsspannung der Kochfeldbelegungssensoreinheit 26 von einem Spannungssollwert stellt die Sicherheitselektronikeinheit 16 einen Fehler fest. Die Abweichung weist auf eine defekte Hardwarekomponente der Kochfeldbelegungssensoreinheit 26 hin. Ein Spannungsparameter der Versorgungsspannung der Kochfeldbelegungssensoreinheit 26 ist mittels einer zweiten Feedbackverbindung über den ersten Multiplexer 50 an die Sicherheitselektronikeinheit 16 übermittelbar.

Das zweite Signal 56 ist ein Referenzmesssignal. Die Kochfeldbelegungssensoreinheit 26 weist eine Oszillatoreinheit auf. Das Referenzmesssignal belastet die Oszillatoreinheit mit einer Referenzlast unter Referenzbedingungen. Eine Reaktion der Oszillatoreinheit ist durch die Sicherheitselektronikeinheit 16 überprüfbar. Eine Abweichung der Reaktion von einer Soll-Reaktion weist auf einen Fehler innerhalb der Kochfeldbelegungssensoreinheit 26 hin. Ein Reaktionsparameter ist mittels einer dritten Feedbackverbindung an die Sicherheitselektronikeinheit 16 übermittelbar.

Die Sicherheitselektronikeinheit 16 ist zu einer Überprüfung des dritten Signals 58 der Steuereinheit 14 vorgesehen. Die Sicherheitselektronikeinheit 16 führt beispielsweise eine Plausibilitätsprüfung durch. Bei einem Abweichen der Messwerte der Sensoreinheit 20 von einem erwarteten Wert mit einer vorgegebenen Fehlertoleranz stellt die Sicherheitselektronikeinheit 16 eine Fehlfunktion fest.

Die Sicherheitselektronikeinheit 16 ist zu einer Überprüfung des vierten Signals 60 der Steuereinheit 14 vorgesehen. Das vierte Signal 60 steuert eine Adressierung des ersten Multiplexers 50 und des zweiten Multiplexers 52. Die Sicherheitselektronikeinheit 16 überprüft die Adressierung. Bei einer Feststellung eines Adressierungsfehlers durch die Sicherheitselektronikeinheit 16 überführt die Sicherheitselektronikeinheit 16 des Matrixkochfelds 46 in den sicheren Zustand. Ein Adressierungsparameter ist mittels einer vierten Feedbackverbindung an die Sicherheitselektronikeinheit 16 übermittelbar.

Die Sicherheitselektronikeinheit 16 ist zu einer Fehlerdiagnose der Steuereinheit 14 anhand des ersten Signals 56 vorgesehen.

Die Sicherheitselektronikeinheit 16 ist zu einer Fehlerdiagnose der Funktionseinheit 12 an-hand des zweiten Signals 56 und/oder des dritten Signals 58 und/oder des vierten Signals 60 vorgesehen.

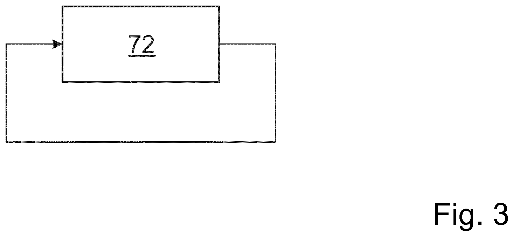

In Fig. 3 ist ein Verfahrensdiagramm eines Verfahrens zum Betrieb der Haushaltsgerätevorrichtung 10 dargestellt. In einem Verfahrensschritt 72 wird das Signal 18 der Funktionseinheit 12 in dem Betriebszustand extern überprüft. Das Signal 18 der Steuereinheit 14 in dem Betriebszustand wird extern überprüft. Der Verfahrensschritt 72 wird periodisch ausgeführt. Es ist vorstellbar, dass der Verfahrensschritt 72 kontinuierlich ausgeführt wird.

### Bezugszeichen

- 10: Haushaltsgerätevorrichtung
- 12: Funktionseinheit
- 14: Steuereinheit
- 16: Sicherheitselektronikeinheit
- 18: Signal
- 20: Sensoreinheit
- 22: Temperatursensoreinheit
- 24: Induktorstromsensoreinheit
- 26: Kochfeldbelegungssensoreinheit
- 28: Multiplexereinheit
- 30: Induktorauswahleinheit
- 32: Versorgungssignal
- 34: Induktor
- 36: Eingangssignal
- 38: Ausgangssignal
- 40: Zwischensignal
- 42: Haushaltsgerät
- 44: Kochfeldoberfläche
- 46: Kochfeld
- 48: Display
- 50: erster Multiplexer
- 52: zweiter Multiplexer
- 54: erstes Signal
- 56: zweites Signal
- 58: drittes Signal
- 60: viertes Signal
- 62: erste Teileinheit
- 64: zweite Teileinheit
- 66: erstes Zwischensignal
- 68: zweites Zwischensignal
- 70: drittes Zwischensignal
- 72: Verfahrensschritt

## Patentansprüche

1. Haushaltsgerät (42), insbesondere Kochfeld, mit zumindest einer Funktionseinheit (12), die zumindest eine Sensoreinheit (20) aufweist, und mit einer Steuereinheit (14), welche zu einer Ansteuerung der Funktionseinheit (12) vorgesehen ist und an der zumindest ein Signal (18, 58) der Funktionseinheit anliegt, wobei das Signal (18, 58) ein Messsignal der Sensoreinheit umfasst, und mit einer von der Steuereinheit (14) separat ausgebildeten Sicherheitselektronikeinheit (16), welche in zumindest einem Betriebszustand zu einer Überprüfung zumindest des Signals (18, 58) der Funktionseinheit (12) vorgesehen ist, wobei die Sicherheitselektronikeinheit (16) zu einer Fehlerdiagnose der Funktionseinheit (12) und/oder Steuereinheit (14) anhand des Signals (18, 58) vorgesehen ist.

2. Haushaltsgerät (42) nach Anspruch 1, **dadurch gekennzeichnet, dass** die Sicherheitselektronikeinheit (16) dazu vorgesehen ist, im Falle zumindest eines erkannten Fehlers einen sicheren Zustand zu initiieren.

3. Haushaltsgerät (42) nach einem der vorhergehenden Ansprüche, **dadurch gekennzeichnet, dass** die Funktionseinheit (12) zumindest eine Multiplexereinheit (28) mit zumindest einem Ausgangskanal und einer Mehrzahl von Eingangskanälen aufweist, welche dazu vorgesehen ist, zumindest ein Multiplexeingangssignal auf zumindest einem der Eingangskanäle als ein Multiplexausgangssignal auf dem Ausgangskanal bereitzustellen.

4. Haushaltsgerät (42) nach einem der vorhergehenden Ansprüche, **dadurch gekennzeichnet, dass** die Funktionseinheit (12) zumindest eine Induktorauswahleinheit (30) zur Auswahl zumindest eines zu betreibenden Induktors (34) aufweist.

5. Haushaltsgerät (42) nach einem der vorhergehenden Ansprüche, **dadurch gekennzeichnet, dass** das Signal (18) ein Versorgungssignal (32) der Steuereinheit (14) ist.

6. Haushaltsgerät (42) nach einem der Ansprüche 1 bis 4, **dadurch gekennzeichnet, dass** das Signal (18) ein Eingangssignal (36) ist.

7. Haushaltsgerät (42) nach einem der Ansprüche 1 bis 4, **dadurch gekennzeichnet, dass** das Signal (18) ein Ausgangssignal (38) der Funktionseinheit (12) ist.

8. Haushaltsgerät (42) nach einem der Ansprüche 1 bis 4, **dadurch gekennzeichnet, dass** das Signal (18) ein Zwischensignal (40) der Funktionseinheit (12) ist, welches zwischen zumindest zwei Teileinheiten der Funktionseinheit (12) übermittelbar ist.

## Claims

1. Household appliance (42), in particular hob, having at least one functional unit (12), which has at least one sensor unit (20), and having a control unit (14), which is provided for controlling the functional unit (12), and against which at least one signal (18, 58) of the functional unit rests, wherein the signal (18, 58) comprises a measuring signal of the sensor unit and having a safety electronics unit (16) embodied separately from the control unit (14) which is provided, in at least one operating state, for checking at least the signal (18, 58) of the functional unit (12), wherein the safety electronics unit (16) is provided for a fault diagnosis of the functional unit (12) and/or control unit (14) on the basis of the signal (18, 58).

2. Household appliance (42) according to claim 1, **characterised in that** the safety electronics unit (16) is provided to initiate a safe state in the event of at least one identified error.

3. Household appliance (42) according to one of the preceding claims, **characterised in that** the functional unit (12) has at least one multiplexer unit (28) with at least one output channel and a plurality of input channels, which is provided to supply at least one multiplex input signal on at least one of the input channels as a multiplex output signal on the output channel.

4. Household appliance (42) according to one of the preceding claims, **characterised in that** the functional unit (12) has at least one inductor selection unit (30) for selecting at least one inductor (34) to be operated.

5. Household appliance (42) according to one of the preceding claims, **characterised in that** the signal (18) is a supply signal (32) of the control unit (14).

6. Household appliance (42) according to one of claims 1 to 4, **characterised in that** the signal (18) is an input signal (36).

7. Household appliance (42) according to one of claims 1 to 4, **characterised in that** the signal (18) is an output signal (38) of the functional unit (12).

8. Household appliance (42) according to one of claims 1 to 4, **characterised in that** the signal (18) is an intermediate signal (40) of the functional unit (12) which can be transferred between at least two subunits of the functional unit (12).

## Revendications

1. Appareil ménager (42), en particulier champ de cuisson avec au moins une unité fonctionnelle (12), qui présente au moins une unité de capteurs (20), et avec une unité de commande (14) prévue afin de commander l'unité fonctionnelle (12) et à laquelle au moins un signal (18, 58) de l'unité fonctionnelle est adjoint, dans lequel le signal (18, 58) comprend un signal de mesure de l'unité de capteurs, et avec une unité électronique de sécurité (16) formée séparément de l'unité de commande (14), prévue afin de vérifier, dans au moins un état de fonctionnement, au moins le signal (18, 58) de l'unité fonctionnelle (12), dans lequel l'unité électronique de sécurité (16) est prévue pour un diagnostic d'erreur de l'unité fonctionnelle (12) et/ou de l'unité de commande (14) au moyen du signal (18, 58).

2. Appareil ménager (42) selon la revendication 1, **caractérisé en ce que** l'unité électronique de sécurité (16) est prévue afin de lancer un état sécurisé dans l'hypothèse où au moins une erreur est détectée.

3. Appareil ménager (42) selon l'une des revendications précédentes, **caractérisé en ce que** l'unité fonctionnelle (12) présente au moins une unité de multiplexage (28) avec au moins un canal de sortie et une pluralité de canaux d'entrée, laquelle est prévue afin de mettre à disposition au moins un signal d'entrée multiplexé sur au moins un des canaux d'entrée, sous la forme d'un signal de sortie multiplexé sur le canal de sortie.

4. Appareil ménager (42) selon l'une des revendications précédentes, **caractérisé en ce que** l'unité fonctionnelle (12) présente au moins une unité de sélection d'inducteur (30) pour la sélection d'au moins un inducteur (34) à exploiter.

5. Appareil ménager (42) selon l'une des revendications précédentes, **caractérisé en ce que** le signal (18) est un signal d'alimentation (32) de l'unité de commande (14).

6. Appareil ménager (42) selon l'une des revendications 1 à 4, **caractérisé en ce que** le signal (18) est un signal d'entrée.

7. Appareil ménager (42) selon l'une des revendications 1 à 4, **caractérisé en ce que** le signal (18) est un signal de sortie (38) de l'unité fonctionnelle (12).

8. Appareil ménager (42) selon l'une des revendications 1 à 4, **caractérisé en ce que** le signal (18) est un signal intermédiaire (40) de l'unité fonctionnelle (12), lequel peut être transmis entre au moins deux unités partielles de l'unité fonctionnelle (12).
